Europäisches Patentamt

European Patent Office

Office européen des brevets

(19)

(11) **EP 1 400 056 B1**

(12) **FASCICULE DE BREVET EUROPEEN**

(45) Date de publication et mention
de la délivrance du brevet:
**01.12.2004 Bulletin 2004/49**

(21) Numéro de dépôt: **02755087.0**

(22) Date de dépôt: **24.06.2002**

(51) Int Cl.⁷: **H04L 9/32**

(86) Numéro de dépôt international:
**PCT/FR2002/002174**

(87) Numéro de publication internationale:
**WO 2003/003649 (09.01.2003 Gazette 2003/02)**

(54) **PROCEDE D'AUTHENTIFICATION CRYPTOGRAPHIQUE**

VERFAHREN ZUR KRYPTOGRAPHISCHEN AUTHENTIFIZIERUNG

CRYPTOGRAPHIC AUTHENTICATION PROCESS

(84) Etats contractants désignés:
**AT BE CH CY DE DK ES FI FR GB GR IE IT LI LU
MC NL PT SE TR**

(30) Priorité: **27.06.2001 FR 0108502**

(43) Date de publication de la demande:
**24.03.2004 Bulletin 2004/13**

(73) Titulaire: **FRANCE TELECOM
75015 Paris (FR)**

(72) Inventeurs:
• **Vallee, Luc.**
 **78182 saint Quentin en Yvelines (FR)**
• **PETIT, Stéphane**
 **F-14200 Herouville Saint Clair (FR)**

(56) Documents cités:
 **EP-A- 0 506 637**   **US-A- 5 473 689**

## Description

La présente invention concerne un procédé d'authentification cryptographique entre une première entité dite à authentifier et une seconde entité dite authentifiante.

Un tel procédé permet à un support quelconque, appelé module d'authentification (par exemple une carte à mémoire, un microprocesseur, un logiciel installé sur un ordinateur, etc...) de prouver son identité à des moyens de vérification contenus par exemple dans un serveur, et ceci grâce à un protocole mettant en jeu, sans les révéler, un ou des secrets contenus dans le support.

Plus particulièrement, l'invention concerne un procédé d'authentification cryptographique comprenant une première étape a) au cours de laquelle une première entité, dite à authentifier, adresse à une seconde entité, dite authentifiante, un message protégé par un algorithme cryptographique et une clé secrète.

On connaît des procédés de ce type, notamment les procédés d'authentification de signature à clé publique RSA ( des initiales de leurs auteurs Rivest, Shamir, Adleman) (confer par exemple l'article de R.RIVEST, A.SHAMIR et L.ADLEMAN "A method for obtaining digital signatures and public key cryptosystems" "CACM", Vol.21, No.2, pp 120-126, février 1978) ou DSA (abréviation anglaise de Digital Signature Algorithm).

Au cours de la mise en oeuvre de tels procédés, l'entité authentifiante n'a pas besoin de connaître les secrets contenus dans le module d'identité de l'entité à authentifier, mais seulement des données non confidentielles (la clé publique) pour effectuer une quantité fixe de calculs de vérification. A la suite de ces calculs, l'entité authentifiante aboutit à une réponse de type tout ou rien, c'est à dire "entité authentifiée" ou "entité non authentifiée". Le niveau de sécurité ainsi que le coûts de calculs de ces procédés dépendent de la longueur des clés utilisées qui ont une taille susceptible de varier entre 512 et 1024 bits. Ainsi, lorsque l'entité authentifiante souhaite avoir une certitude la plus élevée possible sur l'authentification de l'entité à authentifier, la taille des clés mises en jeu dans le procédé d'authentification pourra être par exemple de 1024 bits. En revanche, si l'entité authentifiante relâche ses contraintes de certitude, l'exécution du procédé d'authentification peut se faire avec une clé de taille moins élevée, telle que par exemple 512 bits ou 768 bits.

De tels procédés présentent l'inconvénient d'obliger l'entité à authentifier à modifier la taille de sa clé en fonction du degré de certitude souhaité par l'entité authentifiante.

Il existe d'autres procédés d'authentification cryptographique dits à apport de connaissance nulle, tels que notamment les procédés Fiat-Shamir (confer par exemple l'article de A.FIAT et A.SHAMIR "How to prove yourself : practical solutions to identification and signature problems" "CRYPTO'86", pp 186-194, Springer Verlag, Berlin, 1987) et Guillou-Quisquater (confer par exemple l'article de L.GUILLOU et J-J QUISQUATER "A practical zero-knowledge protocol fitted to security microprocessor minimizing both transmission and memory" "EUROCRYPT'88" pp 123-128, Spinger Verlag, Berlin, 1988). ces procédés consistent en une ou plusieurs répétitions du triplet suivant:

-    l'entité à authentifier génère un aléa et envoie à l'entité authentifiante un engagement initial dépendant de cet aléa,
-    l'entité authentifiante envoie à l'entité à authentifier une question Q qui est généralement un aléa,
-    l'entité à authentifier calcule, à l'aide de sa clé secrète d'identification, une réponse R à la question Q en fonction de l'engagement initial envoyé au préalable, et envoie cette réponse à l'entité authentifiante.

L'entité authentifiante vérifie la cohérence entre l'engagement initial, la question Q et la réponse R, à l'aide de la clé publique divulguée par l'entité à authentifier.

Au cours de ce procédé, l'entité authentifiante fixe un nombre t d'itérations du triplé ci-dessus. En répétant t fois ce triplé, l'entité authentifiante acquiert, avec une probabilité croissante avec t et tendant vers 1, la conviction que l'entité à authentifier n'est pas un imposteur. L'entité authentifiante peut donc moduler la quantité de ses calculs de vérification en fonction du degré de certitude qu'il admet pour l'authentification, et ce, en choisissant t, le nombre de fois qu'il itérera le triplé ci-dessus. Une telle modulation présente l'inconvénient d'être visible pour l'entité à authentifier qui, en fonction du nombre t de fois où l'entité authentifiante lui envoie la question Q, peut déduire aisément quelle est la prise de risque de l'entité authentifiante.

On connaît également d'autres procédés d'authentification cryptographique dans lesquels seules certaines informations sur l'entité à authentifier sont révélées à l'entité authentifiante. Un tel procédé est par exemple décrit dans l'article de F.BOUDOT "Preuves d'égalité, d'appartenance à un intervalle et leurs applications" "Thèse de doctorat de l'université de Caen", 25 septembre 2000. L'inconvénient de ce procédé réside dans le fait que l'entité authentifiante est liée par les informations que veut bien lui révéler l'entité à authentifier. En outre, le niveau de sécurité d'un tel procédé s'en trouve amoindri.

On connaît également des procédés d'authentification cryptographique, dans lesquels les calculs de vérification effectués par l'entité authentifiante sont minimisés. C'est le cas par exemple du protocole SSL (abréviation anglaise de Secure Sockets Layer) (Confer par exemple le document Netscape Communications Corp. "The SSL Protocol Version 3.0" "Internet Draft", mars 1996, URL : home.netscape.com/eng/ssl3). Ce protocole est conçu pour assurer la confidentialité entre une entité à authentifier, généralement un client Ceb, et une entité authentifiante, généralement un serveur Ceb. Une première étape de ce protocole consiste, lors de l'ouverture d'une session SSL, en une validation de transfert de données au cours de laquelle le client et le serveur :

- choisissent un algorithme cryptographique à clé publique et la longueur de la clé utilisée,
- et négocient des clés de session.

Au cours d'une seconde étape, une fois que la transmission des données de l'application débute, toutes les données sont authentifiées à l'aide d'un algorithme à clé secrète, en utilisant les clés de session établies durant la phase de validation, la finalité de ce chiffrement ayant pour but d'authentifier les échanges entre le client et le serveur.

L'inconvénient de ce protocole réside dans le fait qu'il nécessite deux algorithmes de chiffrement très différents, ce qui le rend très long et coûteux en calculs. En outre, il ne permet pas au serveur de faire varier les étapes calculatoires de vérification.

Il existe également les procédés dits biométriques qui consistent en une identification d'une personne sur la base de caractères physiologiques (empreintes digitales, forme de la main, traits du visage, dessin du réseau veineux de l'oeil, la voix, etc...) ou de traits comportementaux (vitesse de déplacement du stylo, les accélérations, la pression exercée, l'inclinaison, etc...) automatiquement reconnaissables et vérifiables.

L'inconvénient de ce type de procédés réside dans le fait qu'ils ne sont adaptés ni à l'authentification d'une entité telle que par exemple un ordinateur, ni à l'authentification de message. Par ailleurs, si des seuils sont couramment utilisés pour ajuster le risque d'erreur d'authentification, la suppression complète des risques d'imposture conduit à un risque non nul de rejeter une entité à authentifier légitime.

La présente invention a notamment pour but de remédier aux inconvénients précités.

A cet effet, le procédé d'authentification cryptographique selon l'invention est caractérisé en ce que le procédé comprend une seconde étape b) au cours de laquelle la seconde entité procède, suite à la réception dudit message, à l'une des opérations comprises dans le groupe des opérations consistant à :

- vérifier complètement l'authentification dudit message protégé reçu au moyen dudit algorithme cryptographique et d'une clé de vérification,
- retarder la vérification complète de l'authentification dudit message protégé,
- vérifier partiellement l'authentification dudit message protégé reçu au moyen dudit algorithme cryptographique et de ladite clé de vérification,
- vérifier partiellement l'authentification dudit message protégé reçu au moyen dudit algorithme cryptographique et de ladite clé de vérification et compléter ultérieurement la vérification,
- omettre la vérification de l'authentification dudit message protégé, le choix de l'une desdites opérations étant, d'une part, fonction du degré de certitude que la seconde entité souhaite obtenir sur l'authentification de la première entité, et, d'autre part, masqué à la première entité.

L'entité authentifiante a ainsi la possibilité de choisir le degré de certitude qu'il souhaite lors de l'authentification de l'entité à authentifier, ce degré pouvant être lié à une politique de gestion de risque d'erreur, ce choix étant d'une totale transparence pour l'entité à authentifier.

Dans des modes de réalisation préférés du procédé selon l'invention, on a recours à l'une et/ou à l'autre des dispositions suivantes :

- l'algorithme cryptographique est un algorithme à clef publique ;
- l'algorithme cryptographique est du type RSA, dans lequel la clé publique est fonction au moins d'un module ;
- le message protégé présente une longueur qui est égale à au plus la moitié du module de ladite clé publique ;
- l'algorithme cryptographique est du type DSA ;
- l'algorithme cryptographique est à apport de connaissance nulle ;
- l'algorithme cryptographique est du type à clé secrète ;
- la première entité est un client, tandis que la seconde entité est un serveur.

La présente invention concerne également un serveur mis en oeuvre dans le procédé selon l'invention, ledit serveur étant caractérisé en ce qu'il comprend :

- un premier moyen de vérification apte à vérifier complètement l'authentification dudit message protégé reçu au moyen dudit algorithme cryptographique et d'une clé de vérification,
- un second moyen de vérification apte à vérifier partiellement l'authentification dudit message protégé reçu au moyen dudit algorithme cryptographique et de ladite clé de vérification,
- une base de données contenant un ou plusieurs paramètres auquel est affectée une valeur de risque,
- et un moyen d'aiguillage des messages protégés reçus qui, en fonction d'une comparaison effectuée entre le contenu des messages protégés reçus et le ou les paramètres de la base de données, est apte à transmettre les messages vers le premier ou le second moyen de vérification.

Un tel serveur offre ainsi une plus grande rapidité dans la gestion du traitement des messages protégés reçus, ainsi qu'un temps de réactivité plus élevé pour répondre à l'entité à authentifier.

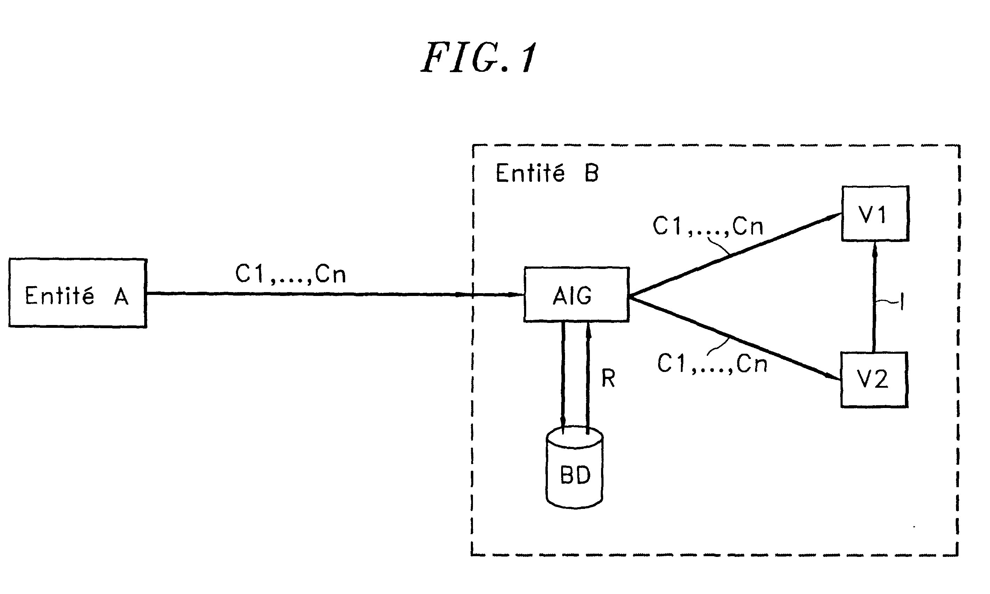

D'autres caractéristiques et avantages de l'invention apparaîtront au cours de la description suivante de plusieurs modes de réalisation du procédé donnés à titre d'exemples non limitatifs et d'un mode de réalisation du serveur représenté sur la figure 1 jointe en annexe.

## PREMIER MODE DE REALISATION

Selon un premier mode de réalisation, le procédé d'authentification cryptographique est du type DSA ou RSA.

Le procédé en question se prête particulièrement au cas dans lequel une entité à authentifier A a besoin d'envoyer un message signé à une entité authentifiante B par l'intermédiaire par exemple d'une carte électronique, l'entité authentifiante B comprend alors par exemple un dispositif de vérification de ladite carte. Le procédé se prête également aux transactions électroniques au cours desquelles l'entité à authentifier A a besoin de signer la transaction pour que cette dernière puisse être vérifiée d'abord par le dispositif de vérification B dans lequel est faite la transaction.

La signature est une signature du type électronique qui, de façon classique, est calculée à l'aide d'une série de règles de calcul définies par l'algorithme RSA et un ensemble de paramètres utilisés dans ces calculs. D'une façon connue en tant que telle, la signature permet à la fois de s'assurer de l'identité du signataire (car elle fait intervenir un exposant secret propre au signataire) et l'intégrité du message signé (car elle fait intervenir le message lui-même). Un tel algorithme permet, d'une part, de générer des signatures, et, d'autre part, d'authentifier ces signatures.

La génération de la signature RSA fait intervenir un exposant secret. L'authentification fait intervenir un exposant public qui correspond à l'exposant secret mais ne lui est pas identique. Chaque utilisateur possède une paire d'exposants (secret, public). Les exposants publics peuvent être connus de tous, alors que les exposants secrets ne sont jamais dévoilés. Toute personne a la capacité de vérifier la signature d'un utilisateur en se servant de l'exposant public de celui-ci, mais seul le possesseur de l'exposant secret peut générer une signature correspondant à la paire d'exposants.

Plus précisément, la carte électronique de l'entité à authentifier A comporte une mémoire dans laquelle est mémorisée une clé publique $K_V$ utilisée pour authentifier des messages électroniques et éventuellement une clé secrète $K_S$ utilisée pour signer lesdits messages électroniques, les deux clés étant constituée respectivement de chaînes de caractères numériques stockées dans la mémoire.

Plus précisément, la clé publique $K_V$ comprend, de façon connue en tant que telle, deux nombres entiers appelés module public n et exposant public v, la clé secrète $K_S$ comprenant quant à elle un nombre entier appelé exposant secret s.

Les deux premiers nombres n et v peuvent être lus sur la carte électronique où ils sont mémorisés. En revanche, l'exposant secret s est mémorisé dans une zone protégée de la carte qui ne peut être lue de l'extérieur. Seuls les circuits de calculs protégés de la carte peuvent accéder en lecture à l'exposant secret s.

Dans le cas du procédé d'authentification RSA selon l'invention, l'entité à authentifier A procède de préférence, au cours d'une étape 1 précédant la signature d'un message M, au hachage de ce dernier au moyen d'un algorithme de hachage de type connu faisant intervenir par exemple la fonction de hachage SHA-1, notée par la suite h. Le résultat obtenu est alors un condensé de message H=h(v, M).

L'avantage d'une telle procédure de hachage est de conférer une sécurité plus importante au procédé de signature et d'authentification.

Au cours d'une étape 2, la carte électronique de l'entité à authentifier A met en oeuvre le calcul suivant pour obtenir la signature S du condensé de message H :

$$H^s \bmod(n) = h(v, M)^s \bmod(n) = S$$

Au cours d'une étape 3, l'entité A émet le couple C = (M, S) en direction du dispositif de vérification B, c'est à dire le condensé du message M, accompagné de sa signature S.

Au cours d'une étape 4, le dispositif de vérification B lit dans la carte de l'entité à authentifier A les paramètres n et v qui ont servi au calcul de la signature S.

Au cours d'une étape 5, ledit dispositif de vérification calcule à partir de la composante S un message M' = $S^v \bmod(n)$ puis calcule une valeur de hachage de M' en appliquant ladite fonction de hachage h de façon à obtenir un condensé de message H' = h(v, M') = h(v, $S^v \bmod(n)$).

Enfin, au cours d'une étape 6, le dispositif de vérification procède à l'authentification de la signature S en vérifiant si le condensé H' est cohérent avec le condensé H reçu. Une telle cohérence dépend du module n de la clé publique utilisée.

Dans le cas par exemple où le module n de la clé publique présente un format répondant à la norme PKCS#1 (abréviation anglaise de Public-Key Cryptography Standard), le dispositif de vérification vérifie que le message M' répond au format suivant :

02∥R∥ 00∥H' où 00 et 02 sont respectivement deux octets, R une chaîne d'octets aléatoires dont la longueur est fixée de façon à ce que M' présente une longueur égale à celle du module publique n, et ∥ symbolise l'opérateur de concaténation.

Dans le cas par exemple où la clé publique utilisée est du type DSA, cette clé étant associée à la fonction de hachage SHA, le dispositif de vérification vérifie que H' = H.

Dans le procédé modifié selon l'invention utilisant la norme PKCS#1 :

- A) l'entité B, qui souhaite avoir un degré de certitude nul sur l'authentification de l'entité A, renvoie simplement, par le biais du dispositif de vérification, à l'entité A, un message d'acquittement de l'authentification de l'entité A ;

- B) l'entité B, dont le dispositif de vérification n'est pas en mesure de procéder en temps réel à l'authentification de l'entité A,

I. soit retarde la vérification complète de l'authentification de l'entité A et renvoie quand même, par le biais de son dispositif de vérification, à l'entité A, un message d'acquittement de l'authentification de l'entité A,

II. soit vérifie partiellement l'authentification de l'entité A, cette vérification étant effectuée uniquement sur la totalité, voire certains seulement, des bits utiles de M', c'est à dire les bits de H', l'entité B renvoyant alors à l'entité A, par le biais de son dispositif de vérification, un message d'acquittement de l'authentification de l'entité A si cette vérification s'avère positive,

III. soit vérifie partiellement l'authentification de l'entité A comme ci-dessus, puis, s'il souhaite obtenir tout de même un degré de certitude plus élevé sur l'entité A, compléter ultérieurement cette vérification en comparant les bits de la chaîne 02∥R∥00 du message M',

- C) l'entité B, qui souhaite avoir un degré de certitude optimal sur l'authentification de l'entité A, vérifie tous les bits du message M' et renvoie, par le biais de son dispositif de vérification, à l'entité A, un message d'acquittement de l'authentification de l'entité A si cette vérification s'avère positive.

Dans le procédé modifié selon l'invention utilisant la clé publique DSA et la fonction de hachage SHA,

- A) l'entité B, qui souhaite avoir un degré de certitude nul sur l'authentification de l'entité A, renvoie simplement à l'entité A, par le biais de son dispositif de vérification, un message d'acquittement de l'authentification de l'entité A ;

- B) l'entité B, dont le dispositif de vérification n'est pas en mesure de procéder en temps réel à l'authentification de l'entité A,

I. soit retarde la vérification complète de l'authentification de l'entité A et renvoie quand même, par le biais de son dispositif de vérification, à l'entité A, un message d'acquittement de l'authentification de l'entité A,

II. soit vérifie partiellement l'authentification de l'entité A, en comparant uniquement les premiers bits des termes de l'égalité H = H', l'entité B renvoyant alors à l'entité A, par le biais de son dispositif de vérification, un message d'acquittement de l'authentification de l'entité A si cette vérification s'avère positive,

III. soit vérifie partiellement l'authentification de l'entité A comme ci-dessus, puis, s'il souhaite obtenir tout de même un degré de certitude plus élevé sur l'entité A, compléter ultérieurement cette vérification en comparant les bits restants des termes de l'égalité H = H',

- C) l'entité B, qui souhaite avoir un degré de certitude optimal sur l'authentification de l'entité A, compare tous les bits des termes de l'égalité H = H' et renvoie, par le biais de son dispositif de vérification, à l'entité A, un message d'acquittement de l'authentification de l'entité A si cette vérification s'avère positive.

## SECOND MODE DE REALISATION

Selon un second mode de réalisation, le procédé d'authentification cryptographique est du type RSA répondant à la norme internationale ISO/IEC 9796 (confer le document ISO "Digital Signature scheme giving message recovery" ISO/IEC 9796(E) : 1991, 1991). Une telle norme a pour but de prescrire la manière dont des messages devraient être formés avant d'être signés par l'algorithme RSA. Elle permet au maximum à la moitié des bits des messages d'être des bits d'information, les autres bits étant des bits de redondance. Les bits d'informations dont il s'agit sont les bits d'une moitié du module n de la clé publique $K_V$ utilisée.

Selon ce second mode de réalisation, on applique un algorithme de hachage dont la taille des résultats est nettement inférieure à la taille de la moitié du module n.

Le procédé se déroule alors de la façon suivante :

Au cours d'une étape 1, l'entité à authentifier A procède à une redondance du message M qu'il souhaite envoyer à l'entité B de façon à obtenir un message IR composé d'une succession de messages M dont le dernier octet est suivi d'un octet de redondance et éventuellement de bits de forçage dont la fonction est de marquer la longueur du message M.

Au cours d'une étape 2, l'entité A calcule la signature $C = IR^s \bmod n$

Au cours d'une étape 3, l'entité A émet le cryptogramme C en direction du dispositif de vérification de l'entité authentifiante B.

Au cours d'une étape 4, le dispositif de vérification de l'entité authentifiante B calcule, à l'aide de la clé publique $K_V$ et à partir du cryptogramme C reçu, IR' = $C^v$ mod(n).

Enfin, au cours d'une étape 5, le dispositif de vérification procède à l'authentification de l'entité A en vérifiant l'égalité IR = IR'.

Dans le procédé modifié selon l'invention,

- A) l'entité B, qui souhaite avoir un degré de certitude nul sur l'authentification de l'entité A, renvoie simplement, par le biais de son dispositif de vérification, à l'entité A, un message d'acquittement de l'authentification de l'entité A;

- B) l'entité B, dont le dispositif de vérification n'est pas en mesure de procéder en temps réel à l'authentification de l'entité A,

I. soit retarde la vérification complète de l'authentification de l'entité A et renvoie quand même, par le biais de son dispositif de vérification, à l'entité A, un message d'acquittement de l'authentification de l'entité A,

II. soit vérifie partiellement l'authentification de l'entité A, en vérifiant l'égalité IR = IR' sur un nombre limité d'octets, l'entité B renvoyant alors à l'entité A, par le biais de son dispositif de vérification, un message d'acquittement de l'authentification de l'entité A si cette vérification s'avère positive,

III. soit vérifie partiellement l'authentification de l'entité A comme ci-dessus, puis, s'il souhaite obtenir tout de même un degré de certitude plus élevé sur l'entité A, compléter ultérieurement cette vérification en vérifiant l'égalité IR = IR' sur les octets restants,

- C) l'entité B, qui souhaite avoir un degré de certitude optimal sur l'authentification de l'entité A, vérifie l'égalité IR = IR' sur tous les bits et renvoie, par le biais de son dispositif de vérification, à l'entité A, un message d'acquittement de l'authentification de l'entité A si cette vérification s'avère positive.

**TROISIÈME MODE DE RÉALISATION**

Selon un troisième mode de réalisation, le procédé d'authentification cryptographique est du type FIAT-SHAMIR ou GUILLOU-QUISQUATER.

a) Procédé FIAT-SHAMIR

De façon classique :

- la clé publique $K_V$ utilisée est un entier inférieur à un grand entier non premier n. n est connu uniquement d'une autorité de confiance dont le rôle est de calculer les clés secrètes des utilisateurs du procédé,

- la clé privée $K_S$ de l'entité à authentifier A produite par l'autorité de confiance est telle que $K_V = K_S^2$ mod n.

Le procédé de base est le suivant:

1) L'entité à authentifier A choisit au hasard un entier r dans l'intervalle {0...n},

2) L'entité A calcule un engagement x = $r^2$modn et l'envoie à l'entité authentifiante B,

3) L'entité B choisit un bit aléatoire e et envoie ce bit à l'entité A,

4) L'entité A calcule la réponse C = r.$K_S$.e, et l'envoie à l'entité B.

5) L'entité B vérifie que $C^2$ = x.$K_V$.e mod n ($\alpha$).

L'entité A s'authentifie auprès de l'entité B en répétant t fois les étapes ci-dessus.

Dans le procédé modifié selon l'invention,

- A) l'entité B, qui souhaite avoir un degré de certitude nul sur l'authentification de l'entité A, renvoie simplement, par le biais de son dispositif de vérification, à l'entité A, un message d'acquittement de l'authentification de l'entité A;

- B) l'entité B, dont le dispositif de vérification n'est pas en mesure de procéder en temps réel à l'authentification de l'entité A,

I. soit retarde la vérification complète de l'authentification de l'entité A et renvoie quand même, par le biais de son dispositif de vérification, à l'entité A, un message d'acquittement de l'authentification de l'entité A,

II. soit vérifie partiellement l'authentification de l'entité A, en ne vérifiant que p relations ($\alpha$) avec 0≤p≤t, l'entité B renvoyant alors à l'entité A, par le biais de son dispositif de vérification, un message d'acquittement de l'authentification de l'entité A si cette vérification s'avère positive,

III. soit vérifie partiellement l'authentification de l'entité A comme ci-dessus, puis, s'il souhaite obtenir tout de même un degré de certitude plus élevé sur l'entité A, compléter ultérieurement cette vérification en vérifiant les t-p relations ($\alpha$) restantes,

- C) l'entité B, qui souhaite avoir un degré de certitude optimal sur l'authentification de l'entité A, vérifie les t relations ($\alpha$) et renvoie, par le biais de son dispositif de vérification, à l'entité A, un message d'acquittement de l'authentification de l'entité A si cette vérification s'avère positive.

b) Procédé GUILLOU-QUISQUATER

De façon classique :

- la clé publique $K_V$ utilisée est un entier inférieur à un grand entier non premier n. n est connu uniquement d'une autorité de confiance dont le rôle est de calculer les clés secrètes des utilisateurs du procédé,
- la clé privée $K_S$ de l'entité à authentifier A produite par l'autorité de confiance est telle que $K_V = K_S^h$ mod n.

Le procédé de base est le suivant:

1) L'entité à authentifier A choisit au hasard un entier r dans l'intervalle {0...n},
2) L'entité A calcule un engagement $x = r^h$ mod n et l'envoie à l'entité authentifiante B,
3) L'entité B choisit un bit aléatoire et envoie ce bit à l'entité A.
4) L'entité A calcule la réponse $C = r.K_S.e$, et l'envoie à l'entité B.
5) L'entité B vérifie que $x = C^h.K_V.e$ mod n (β).

L'entité A prouve son identité à l'entité B en répétant t fois les étapes ci-dessus.
Dans le procédé modifié selon l'invention,

- A) l'entité B, qui souhaite avoir un degré de certitude nul sur l'authentification de l'entité A, renvoie simplement, par le biais de son dispositif de vérification, à l'entité A, un message d'acquittement de l'authentification de l'entité A;
- B) l'entité B, dont le dispositif de vérification n'est pas en mesure de procéder en temps réel à l'authentification de l'entité A,

  I. soit retarde la vérification complète de l'authentification de l'entité A et renvoie quand même, par le biais de son dispositif de vérification, à l'entité A, un message d'acquittement de l'authentification de l'entité A,
  II. soit vérifie partiellement l'authentification de l'entité A, en ne vérifiant que p relations (β) avec 0≤p≤t, l'entité B renvoyant alors à l'entité A, par le biais de son dispositif de vérification, un message d'acquittement de l'authentification de l'entité A si cette vérification s'avère positive,
  III. soit vérifie partiellement l'authentification de l'entité A comme ci-dessus, puis, s'il souhaite obtenir tout de même un degré de certitude plus élevé sur l'entité A, compléter ultérieurement cette vérification en vérifiant les t-p relations (β) restantes,

- C) l'entité B, qui souhaite avoir un degré de certitude optimal sur l'authentification de l'entité A, vérifie les t relations (β) et renvoie, par le biais de son dispositif de vérification, à l'entité A, un message d'acquittement de l'authentification de l'entité A si cette vérification s'avère positive.

Selon les deux variantes décrites ci-dessus, la prise de décision (acceptation/rejet) par l'entité authentifiante B doit apparaître à l'entité à authentifier A au plus tôt après la réception de la t-ième réponse C. Mais comme cela est décrit aux points A) B)I à B)III ci-dessus, la décision effective de l'entité authentifiante B peut être antérieure et permettre des anticipations telle que la préparation d'une réponse à l'entité à authentifier, par exemple une page HTML dynamique dans le cas où l'entité A est un client et l'entité B est un serveur. Cette possibilité offre à l'entité B un gain de temps non négligeable dans le traitement des requêtes de l'entité A.

## QUATRIÈME MODE DE RÉALISATION

Selon un quatrième mode de réalisation, le procédé d'authentification cryptographique est du type à secret partagé entre l'entité à authentifier A et l'entité authentifiante B. Ce secret partagé est une clé secrète $K_S$.
Le procédé de base est le suivant:

1) L'entité à authentifier A génère la clé $K_S$ d'une façon connue en soi et envoie à l'entité authentifiante B une copie de $K_S$ via, par exemple, un canal de communication sécurisé. L'envoi de $K_S$ peut également être effectué de façon implicite par synchronisation entre, d'une part, une horloge, un compteur ou un automate de génération de chaînes de bits aléatoires propre à l'entité A et, d'autre part, une horloge, un compteur ou un automate de génération de chaînes de bits aléatoires propre à l'entité B.
2) L'entité A protège un message M en clair à l'aide d'un algorithme cryptographique choisi E et en utilisant la clé Kv, de façon à obtenir un message C, tel que $C = E(M, Kv, D)$, où D est une donnée qui change à chaque authentification, ladite donnée étant, selon le cas, une valeur temporelle délivrée par l'horloge de l'entité A, une valeur de compteur délivrée par le compteur de l'entité A ou une chaîne de bits aléatoires délivrée par l'automate de l'entité A.
3) L'entité A envoie le message C, M et éventuellement D à l'entité B.
4) L'entité B calcule un message $C' = E(M, K_S, D)$ et vérifie la relation C = C'.

Dans le procédé modifié selon l'invention,

- A) l'entité B, qui souhaite avoir un degré de certitude nul sur l'authentification de l'entité A, renvoie simplement, par le biais de son dispositif de vérification, à l'entité A, un message d'acquittement de l'authentification de l'entité A ;
- B) l'entité B, dont le dispositif de vérification n'est pas en mesure de procéder en temps réel à l'authentification de l'entité A,

I. soit retarde la vérification complète de l'authentification de l'entité A et renvoie quand même, par le biais de son dispositif de vérification, à l'entité A, un message d'acquittement de l'authentification de l'entité A,

II. soit vérifie partiellement l'authentification de l'entité A, en vérifiant l'égalité C = C' sur un nombre limité de bits, l'entité B renvoyant alors à l'entité A, par le biais de son dispositif de vérification, un message d'acquittement de l'authentification de l'entité A si cette vérification s'avère positive,

III. soit vérifie partiellement l'authentification de l'entité A comme ci-dessus, puis, s'il souhaite obtenir tout de même un degré de certitude plus élevé sur l'entité A, compléter ultérieurement cette vérification en vérifiant l'égalité C = C' sur les bits restants,

- C) l'entité B, qui souhaite avoir un degré de certitude optimal sur l'authentification de l'entité A, vérifie l'égalité C = C' sur tous les bits et renvoie, par le biais de son dispositif de vérification, à l'entité A, un message d'acquittement de l'authentification de l'entité A si cette vérification s'avère positive.

Selon ce mode de réalisation, la vérification partielle de l'égalité C = C' est rendue possible par le fait que le message C présente une longueur élevée, laquelle est imposée par les impératifs de la cryptanalyse.

### CINQUIÈME MODE DE RÉALISATION

Selon un cinquième mode de réalisation, le procédé d'authentification cryptographique est du type à échange de mots de passes jetables entre l'entité A et l'entité B. Un tel procédé est décrit par exemple dans l'article de N.HALLER, C.METZ, P.NESSER et M. STRAC "A One-Time Password System", RFC 2289, Bellcore, Kaman Sciences Corporation, Nesser and Nesser Consulting, février 1998.

Le procédé de base est le suivant:

1) L'entité à authentifier A et l'entité authentifiante B se fixent un paramètre n représentatif de la longueur des chaînes des mots de passe qu'ils souhaitent s'adresser.

2) L'entité A génère un mot de passe aléatoire $C_n$ à partir d'un automate logiciel.

3) L'entité A calcule une chaîne de mots de passe $C_{i-1} = h(C_i)$ où h est une fonction de hachage et où $1 \leq i \leq n$, $C_{i-1}$ jouant le rôle d'une clé publique $K_V$ et $C_i$ jouant le rôle d'une clé secrète $K_S$

4) L'entité A envoie $C_0$ à l'entité B, $C_0$ jouant le rôle d'une clé publique $K_V$,

5) L'entité A envoie $C_1$ à l'entité B,

6) L'entité B calcule $h(C_1)$ et vérifie que $h(C_1) = C_0$

.

.

.

6+n) L'entité A envoie $C_n$ à l'entité B,

7+n) L'entité B calcule $h(C_n)$ et vérifie que $h(C_n) = C_{n-1}$

Dans le procédé modifié selon l'invention,

- A) l'entité B, qui souhaite avoir un degré de certitude nul sur l'authentification de l'entité A, renvoie simplement, par le biais de son dispositif de vérification, à l'entité A, un message d'acquittement de l'authentification de l'entité A;

- B) l'entité B, dont le dispositif de vérification n'est pas en mesure de procéder en temps réel à l'authentification de l'entité A,

I. soit retarde la vérification complète de l'authentification de l'entité A et renvoie quand même, par le biais de son dispositif de vérification, à l'entité A, un message d'acquittement de l'authentification de l'entité A,

II. soit vérifie partiellement l'authentification de l'entité A, en vérifiant, au cours d'une ième étape, l'égalité $h(C_i) = C_{i-1}$ sur un nombre limité de bits, l'entité B renvoyant alors à l'entité A, par le biais de son dispositif de vérification, un message d'acquittement de l'authentification de l'entité A si cette vérification s'avère positive,

III. soit vérifie partiellement l'authentification de l'entité A comme ci-dessus, puis, s'il souhaite obtenir tout de même un degré de certitude plus élevé sur l'entité A, compléter ultérieurement cette vérification en vérifiant d'abord l'égalité $h(C_i) = C_{i-1}$ sur les bits restants, puis en vérifiant les égalités $h(C_{i+1}) = C_i, ..., h(C_n) = C_{n-1}$ respectivement sur tous les bits,

- C) l'entité B, qui souhaite avoir un degré de certitude optimal sur l'authentification de l'entité A, vérifie les égalité $h(C_1) = C_0, h(C_2) = C_1, ..., h(C_n) = C_{n-1}$ respectivement sur tous les bits et renvoie, par le biais de son dispositif de vérification, à l'entité A, un message d'acquittement de l'authentification de l'entité A si cette vérification s'avère positive.

L'avantage des cinq modes de réalisation décrits ci-dessus réside dans le fait que quelle que soit la politique d'authentification envisagée par l'entité authentifiante B, les calculs de vérification sont effectués localement dans le dispositif de vérification de l'entité B, le choix du degré de certitude de l'entité B étant ainsi complètement masqué à l'entité A qui se contente de recevoir systématiquement, suite à l'envoi de son message protégé par l'algorithme cryptographique, un message d'acquittement du résultat de son authentification. Cela se traduit, de la part de l'entité B, par une plus grande réactivité dans sa réponse à l'entité A. Il en résulte que l'entité A est beaucoup moins tentée d'interrompre la connexion avec l'entité B, puisqu'il reçoit systématiquement de la part de l'entité B un message d'acquittement d'authentification quel que soit le degré de calcul de vérification effectué par l'entité B.

Afin que l'entité B puisse moduler les calculs de vérification, le dispositif de vérification de l'entité B comprend, en référence à la figure 1, un premier moyen de vérification V1 qui est destiné à vérifier complètement tout message C1, C2, ..., Cn, protégé par algorithme cryptographique, reçu en provenance de l'entité A. Ledit dispositif de vérification comprend en outre un second moyen de vérification V2 qui est destiné à vérifier partiellement tout message C1, C2, ..., Cn.

Les moyens de vérification V1 et V2 sont des modules de calcul qui sont programmés selon les algorithmes cryptographiques utilisés dans les cinq modes de réalisation décrits ci-dessus. En outre, le moyen de vérification V2 est programmé selon le degré plus ou moins partiel de vérification souhaité par l'entité B.

Le dispositif de vérification de l'entité B comprend également un module logiciel AIG qui est conçu pour aiguiller automatiquement les messages C1, C2, ..., Cn reçus par l'entité B en direction soit du moyen de vérification V1, soit du moyen de vérification V2, ceci en fonction de la politique d'authentification décidée en temps réel par l'entité B. A cet effet, le dispositif de vérification comporte une base de données BD dans laquelle est mémorisée le/les paramètre(s) suivants :

- le type d'entité A : lié par un contrat d'abonnement à l'entité B, occasionnel, inconnu ;
- le type de service ou d'informations demandé, ainsi que la logique dans l'enchaînement des messages C1, C2, ..., Cn envoyés à l'entité B ;
- le temps écoulé ou le nombre de connexions depuis la dernière authentification complète de l'entité A ;
- la connaissance, prévisible ou acquise, du comportement habituel de l'entité A et de son comportement actuel, par exemple en matière d'achat et de paiement ;
- le prix de vente de l'information ou du service à payer ;
- le cumul des paiements en cours ou tout autre information de nature monétique.

A chacun de ces paramètres est attribuée une valeur de risque R. Il en est de même des éléments contextuels suivants :

- la charge de l'entité B (nombre de connexions, débit, variété des protocoles utilisés ...) ;
- le contexte de l'échange : réseau d'accès, origine géographique de la connexion effectuée par l'entité A, plage horaire, jour, ....

Ladite base de données comporte en outre un moyen de comparaison qui compare la nature du contenu des messages C1, C2, ..., Cn reçus avec le/les paramètres ci-dessus de façon à attribuer à chaque contenu une valeur de risque R.

Si la valeur de risque est inférieure ou égale à une première valeur de seuil x1, le module logiciel AIG inhibe l'actionnement des moyens de vérification V1, V2.

Si la valeur de risque est supérieure ou égale à une seconde valeur de seuil x2>x1, le module logiciel aiguille les messages C1, C2, ..., Cn en direction du moyen de vérification V1.

Si $x1 \leq R \leq x2$, le module logiciel AIG aiguille les messages C1, C2, ..., Cn en direction du moyen de vérification V2.

Comme on peut le voir sur la figure 1, une interface I est en outre prévue entre les moyens de vérification V1 et V2 de façon à mettre en oeuvre l'alternative B.III décrite dans les cinq modes de réalisation ci-dessus, c'est à dire à transmettre, à un temps donné choisi par l'entité B, les messages C1, C2,.., Cn vérifiés partiellement en premier lieu dans le moyen de vérification V1, en direction du moyen de vérification V2 qui est destiné à compléter ladite vérification partielle.

## APPLICATIONS

La présente invention trouve une première application dans l'accès aux services interactifs utilisant différents réseaux de communication, tels que notamment Internet, la télévision par câble, l'ADSL (abréviation anglaise de Asymmetric Digital Subscriber Line), etc.....

Dans ce cas, l'entité authentifiante B joue le rôle de serveur ou de prestataire, tandis que l'entité à authentifier A joue le rôle de client du serveur ou du prestataire. Le client A est alors muni d'un équipement de télécommunications qui est relié au serveur B ou à un équipement de télécommunications appartenant au prestataire B par l'intermédiaire d'un canal de télécommunications sécurisé.

Les services interactifs ci-dessus proposent des informations dont les conditions d'accès sont variables en termes de prix, caractère public, confidentialité, etc.... En outre, ils induisent de nombreux échanges entre le client A et le serveur ou prestataire B, ce qui permet à ce dernier d'acquérir une certaine connaissance du client A et donc des risques associés. Enfin, le serveur B est conçu dans le but d'opter pour une politique d'authentification qui prend en compte le compromis entre qualité du service offert et degré de sécurité.

Ainsi, le serveur ou prestataire B a la faculté de moduler l'authentification du client A et/ou retarder la vérification fine de son identité, selon les critères suivants:

- le type de client A : abonné au serveur B, occasionnel, inconnu ;
- le comportement actuel du client A et la connaissance de son comportement habituel;
- le type de service ou d'informations demandé, ainsi que la logique dans l'enchaînement des demandes ;
- la charge du serveur (nombre de connexions, débit, variété des protocoles utilisés ...) ;
- le temps écoulé ou le nombre de connexions depuis la dernière authentification complète du client A ;
- le contexte de l'échange : réseau d'accès, origine géographique de la connexion, plage horaire, jour, ....

La présente invention trouve une seconde application dans le paiement électronique, en évitant que le coût des calculs d'authentification ne soit trop élevé en regard du montant du paiement et du risque de perte par fausse authentification, ceci afin d'améliorer la viabilité économique du service de paiement.

Dans ce cas, l'entité authentifiante B joue le rôle de serveur ou de prestataire devant être payé, tandis que l'entité à authentifier A joue le rôle de client du serveur ou du prestataire B. Le client A est alors muni d'un équipement de télécommunications qui est relié au serveur B ou à un équipement de télécommunications appartenant au prestataire B par l'intermédiaire d'un canal de télécommunications sécurisé.

Le paiement électronique ci-dessus engendre des services ou des informations dont le prix unitaire est faible (par exemple de l'ordre d'un dixième d'euro). En outre, il induit de nombreux paiements en raison de la logique d'enchaînement de ces services ou de ces informations, ce qui permet au serveur ou prestataire B d'acquérir une certaine connaissance du client A et donc des risques associés. Enfin, le serveur B est conçu dans le but d'opter pour une politique d'authentification qui prend en compte le compromis entre qualité du service offert et degré de sécurité, en particulier pour ne pas décourager les achats dits "impulsifs".

Ainsi, le serveur ou prestataire B a la faculté de moduler l'authentification du client A et/ou retarder la vérification fine de son identité, selon les critères suivants:

- le type de client A : abonné au serveur B, occasionnel, inconnu ;
- la connaissance, prévisible ou acquise, du comportement habituel du client A et de son comportement actuel, en matière d'achat et de paiement ;
- le type de service ou d'informations demandé, ainsi que la logique dans l'enchaînement des demandes ;
- le prix de vente de l'information ou du service à payer ;
- le cumul des paiements en cours ou tout autre information de nature monétique ;

- le temps écoulé, le montant cumulé ou le nombre de connexions depuis la dernière authentification complète du client A ;
- la charge du serveur (nombre de connexions, débit, variété des protocoles utilisés ... ) ;
- le contexte de l'échange (réseau d'accès, moyen de paiement utilisé, origine géographique de la connexion, plage horaire, jour, ...).

## Revendications

1. Procédé d'authentification cryptographique comprenant une première étape a) au cours de laquelle une première entité (A), dite à authentifier, adresse à une seconde entité (B), dite authentifiante, un message protégé par un algorithme cryptographique et une clé secrète ($K_S$), **caractérisé en ce que** :

    le procédé comprend une seconde étape b) au cours de laquelle la seconde entité (B) procède, suite à la réception dudit message, à l'une des opérations comprises dans le groupe des opérations consistant à :

    - vérifier complètement l'authentification dudit message protégé reçu au moyen dudit algorithme cryptographique et d'une clé de vérification ($K_V$),
    - retarder la vérification complète de l'authentification dudit message protégé,
    - vérifier partiellement l'authentification dudit message protégé reçu au moyen dudit algorithme cryptographique et de ladite clé de vérification ($K_V$),
    - vérifier partiellement l'authentification dudit message protégé reçu au moyen dudit algorithme cryptographique et de ladite clé de vérification ($K_V$) et compléter ultérieurement la vérification,
    - omettre la vérification de l'authentification dudit message protégé,

    le choix de l'une desdites opérations étant, d'une part, fonction du degré de certitude que la seconde entité (B) souhaite obtenir sur l'authentification de la première entité (A), et, d'autre part, masqué à la première entité (A).

2. Procédé selon la revendication 1, dans lequel l'algorithme cryptographique est un algorithme à clef publique ($K_V$).

3. Procédé selon la revendication 2, dans lequel l'algorithme cryptographique est du type RSA, dans lequel la clé publique ($K_V$) est fonction au moins d'un module (n).

**4.** Procédé selon la revendication 3, dans lequel le message protégé présente une longueur qui est égale à au plus la moitié du module (n) de ladite clé publique.

**5.** Procédé selon la revendication 2, dans lequel l'algorithme cryptographique est du type DSA.

**6.** Procédé selon la revendication 2, dans lequel l'algorithme cryptographique est à apport de connaissance nulle.

**7.** Procédé selon la revendication 1, dans lequel l'algorithme cryptographique est du type à clé secrète ($K_S$).

**8.** Procédé selon l'une quelconque des revendications 1 à 7, dans lequel la première entité (A) est un client, tandis que la seconde entité (B) est un serveur.

**9.** Serveur (B) adapté à mettre en oeuvre la seconde étape b) du procédé selon la revendication 8, **caractérisé en ce qu'**il comprend:

- un premier moyen de vérification (V1) apte à vérifier complètement l'authentification dudit message protégé reçu au moyen dudit algorithme cryptographique et d'une clé de vérification ($K_V$),
- un second moyen de vérification (V2) apte à vérifier partiellement l'authentification dudit message protégé reçu au moyen dudit algorithme cryptographique et de ladite clé de vérification ($K_V$),
- une base de données (BD) contenant un ou plusieurs paramètres auquel est affectée une valeur de risque (R),
- et un moyen d'aiguillage (AIG) des messages protégés reçus qui, en fonction d'une comparaison effectuée entre le contenu des messages protégés reçus et le ou les paramètres de la base de données (BD), est apte à transmettre les messages vers le premier (V1) ou le second (V2) moyen de vérification.

**Claims**

**1.** A cryptographic authentication method including a first step

    a) during which a first entity (A) to be authenticated sends an authenticator second entity (B) a message protected by a cryptographic algorithm and a secret key ($K_S$),
    which method is **characterized in that**:

        it includes a second step b) during which the second entity (B), after receiving said message, carries out an operation selected from the group comprising:

- completely verifying the authentication of the received protected message by means of said cryptographic algorithm and a verification key ($K_V$),
- delaying complete verification of the authentication of said protected message,
- partly verifying the authentication of the received protected message by means of said cryptographic algorithm and said verification key ($K_v$),
- partly verifying the authentication of the received protected message by means of said cryptographic algorithm and said verification key ($K_v$) and completing the verification subsequently, and
- omitting to verify the authentication of said protected message,

and **in that** one of said operations is chosen as a function of the degree of certainty that the second entity (B) wishes to obtain as to the authentication of the first entity (A) and is concealed from the first entity (A).

**2.** A method according to claim 1, wherein the cryptographic algorithm is a public key ($K_v$) algorithm.

**3.** A method according to claim 2, wherein the cryptographic algorithm is an RSA algorithm in which the public key ($K_v$) is a function of a modulus (n).

**4.** A method according to claim 3, wherein the protected message has a length that is at most equal to half the modulus (n) of said public key.

**5.** A method according to claim 2, wherein the cryptographic algorithm is a DSA algorithm.

**6.** A method according to claim 2, wherein the cryptographic algorithm is a zero knowledge algorithm.

**7.** A method according to claim 1, wherein the cryptographic algorithm is a secret key ($K_S$) algorithm.

**8.** A method according to any of claims 1 to 7, wherein the first entity (A) is a client and the second entity (B) is a server.

**9.** A server (B) adapted to implement the second step b) of the method according to claim 8, **characterized in that** it includes:

- first verification means (V1) able to verify completely the authentication of the received protected message by means of said cryptographic algorithm and a verification key ($K_v$),
- second verification means (V2) able to verify partially the authentication of the received protected message by means of said cryptographic algorithm and said verification key ($K_v$),
- a database (BD) containing one or more parameters assigned a risk value (R), and
- switching means (AIG) for switching received protected messages to the first verification means (V1) or to the second verification means (V2) as a function of comparing the content of the received protected messages and a parameters or parameters from the data base (BD).

**Patentansprüche**

1. Kryptographisches Authentifizierungsverfahren mit einer ersten Stufe a), in deren Verlauf eine erste, so genannte zu authentifizierende Einheit (A) an eine zweite, so genannte authentifizierende Einheit (B), eine durch einen kryptographischen Algorithmus und einen geheimen Schlüssel (Ks) geschützte Meldung adressiert,
   **dadurch gekennzeichnet, dass:**
   das Verfahren eine zweite Stufe b) umfasst, in deren Verlauf die zweite Einheit (B) im Anschluss an den Empfang der genannten Meldung eine der in der Gruppe inbegriffenen Operationen vornimmt, bestehend aus:

   - der vollständigen Überprüfung der Authentifizierung der genannten, mittels des genannten kryptographischen Algorithmus und eines Überprüfungsschlüssels ($K_v$) erhaltenen geschützten Meldung
   - Verzögerung der vollständigen Überprüfung der Authentifizierung der genannten geschützten Meldung,
   - teilweise Überprüfung der Authentifizierung der genannten mittels des genannten kryptographischen Algorithmus und des genannten Überprüfungsschlüssels ($K_v$) erhaltenen geschützten Meldung,
   - teilweise Überprüfung der Authentifizierung der genannten mittels des genannten kryptographischen Algorithmus und des Überprüfungsschlüssels ($K_v$) erhaltenen geschützten Meldung und spätere Vervollständigung der Überprüfung,
   - Auslassen der Überprüfung des Algorithmus der genannten geschützten Meldung, wobei die Wahl einer der genannten Operationen einerseits vom Grad der Gewissheit abhängt, die die zweite Einheit (B) über die Authentifizierung der ersten Einheit (A) zu erhalten wünscht und andererseits von der ersten Einheit (A) überdeckt wird.

2. Verfahren gemäß Anspruch 1, in dem der kryptographische Algorithmus einen öffentlichen Schlüssel ($K_v$) hat.

3. Verfahren gemäß Anspruch 2, in dem der kryptographische Algorithmus vom Typ RSA ist, in dem der öffentliche Schlüssel ($K_v$) von wenigstens einem Modul (n) abhängt.

4. Verfahren gemäß Anspruch 3, in dem die geschützte Meldung eine Länge aufweist, die höchstens gleich der Hälfte des Moduls (n) des genannten öffentlichen Schlüssels ist.

5. Verfahren gemäß Anspruch 2, in dem der kryptographisch Algorithmus vom Typ DSA ist.

6. Verfahren gemäß Anspruch 2, in dem der kryptographische Algorithmus ein Kenntnisdargebot von Null hat.

7. Verfahren gemäß Anspruch 1, in dem der kryptographische Algorithmus vom Typ mit geheimem Schlüssel ($K_s$) ist.

8. Verfahren gemäß Anspruch 1 bis 7, in dem die erste Einheit (A) ein Client ist, während die zweite Einheit (B) ein Server ist.

9. In dem Verfahren zur Umsetzung der zweiten Stufe b) des Verfahrens gemäß Anspruch 8 geeigneter Server, **dadurch gekennzeichnet, dass** er Folgendes umfasst:

   - ein erstes, zur vollständigen Überprüfung der Authentifizierung der genannten, mittels des genannten kryptographischen Algorithmus und eines Überprüfungsschlüssels ($K_v$) erhaltenen geschützten Meldung geeignetes Überprüfungsmittel (V1),
   - ein zweites, zur teilweisen Überprüfung der Authentifizierung der genannten, mittels des genannten kryptographischen Algorithmus und des genannten Überprüfungsschlüssels ($K_v$) erhaltenen geschützten Meldung geeignetes Überprüfungsmittel (V2),
   - eine einen oder mehrere Parameter enthaltende Datenbank (BD), denen[1] ein Risikowert (R) zugeordnet ist,
   - und ein Weichenmittel (AIG) der erhaltenen geschützten Meldungen, die in Abhängigkeit eines zwischen dem Inhalt der erhaltenen geschützten Meldungen und dem oder den Parametern der Datenbank (BD) durchgeführten Vergleichs zur Übertragung der Meldungen zum ersten (V1) oder zweiten (V2) Überprüfungsmittel geeignet ist.

*FIG. 1*